# EUROPEAN PATENT APPLICATION

(11) **EP 4 852 438 A1**
(43) Date of publication of application: **09.12.2026**
(21) Application number: 24921759.7
(22) Date of filing: 16.12.2024
(51) Int. Cl.: H04N 21/475, H04N 21/431

(54) **INTERACTION INFORMATION DISPLAY METHOD AND APPARATUS, MEDIA CONTENT GENERATION METHOD AND APPARATUS, ELECTRONIC DEVICE, STORAGE MEDIUM AND PROGRAM PRODUCT**

(30) Priority: 04.02.2024 CN 202410162145
(71) Applicant: Beijing Zitiao Network Technology Co., Ltd., Beijing 100190 (CN)
(72) Inventor: WANG, Xinjuan, Beijing 100028 (CN)
(74) Representative: Isarpatent
(86) International application number: PCT/CN2024/139577
(87) International publication number: WO 2025/161737

(57) **Abstract**

Provided in the embodiments of the present disclosure are an interaction information display method and apparatus, a media content generation method and apparatus, an electronic device, a storage medium and a program product. The interaction information display method comprises: receiving a first display operation for media content; and in response to the first display operation, displaying a media content picture of the media content, and displaying at least some associated interaction information of the media content picture, wherein an associated picture element of the associated interaction information is presented in the media content picture, the associated interaction information is displayed at an associated display position of the associated picture element corresponding to the associated interaction information, and the associated picture element is set by a user who publishes the associated interaction information. By using the technical solution, the embodiments of the present disclosure can enrich display modes of interaction information.

## Description

The present application claims priority to Chinese Patent Application No. 202410162145.5, filed on February 4, 2024, which is incorporated herein by reference in its entirety as a part of the present application.

### TECHNICAL FIELD

Embodiments of the present disclosure relate to a method and apparatus of displaying interactive information, a method and apparatus of generating media content, an electronic device, a storage medium, and a program product.

### BACKGROUND

At present, when media content is displayed, interactive information of the media content, such as bullet screen information of the media content, may be displayed. However, the display mode of the interactive information is relatively monotonous.

### SUMMARY

Embodiments of the present disclosure provide a method and apparatus of displaying interactive information, a method and apparatus of generating media content, an electronic device, a storage medium, and a program product to enrich display modes of the interactive information.

In a first aspect, an embodiment of the present disclosure provides a method of displaying interactive information, applied to a first application, where the method includes:
receiving a first display operation for media content; and
in response to the first display operation, displaying a media content image of the media content and displaying at least part of associated interactive information of the media content image, where an associated image element of the associated interactive information is presented in the media content image, the associated interactive information is displayed at an associated display position of the associated image element corresponding to the associated interactive information, and the associated image element is set by a content provider of the associated interactive information.

In a second aspect, an embodiment of the present disclosure further provides a method of generating media content, applied to a second application, where the method includes:
in response to a material display operation, displaying a material interface, where at least one candidate material is displayed in the material interface, and the candidate material is obtained by shooting in a single view angle; and
in response to a confirmation operation acted on the material interface, displaying generation prompt information of media content, where the media content is a panoramic video generated based on an original material, the media content supports displaying interactive information at an associated display position of an associated image element corresponding to the interactive information, the original material is a candidate material confirmed by the confirmation operation, and the generation prompt information is used for prompting that the generation of the media content is completed.

In a third aspect, an embodiment of the present disclosure further provides an apparatus of displaying interactive information, configured in a first application, where the apparatus includes:
an operation receiving module, configured to receive a first display operation for media content; and
a first information display module, configured to, in response to the first display operation, display a media content image of the media content and display at least part of associated interactive information of the media content image, where an associated image element of the associated interactive information is presented in the media content image, the associated interactive information is displayed at an associated display position of the associated image element corresponding to the associated interactive information, and the associated image element is set by a content provider of the associated interactive information.

In a fourth aspect, an embodiment of the present disclosure further provides an apparatus of generating media content, configured in a second application, where the apparatus includes:
a material display module, configured to, in response to a material display operation, display a material interface where at least one candidate material is displayed in the material interface, and the candidate material is obtained by shooting in a single view angle; and
a prompt module, configured to, in response to a confirmation operation acted on the material interface, display generation prompt information of media content, where the media content is a panoramic video generated based on an original material, the media content supports displaying interactive information at an associated display position of an associated image element corresponding to the interactive information, the original material is a candidate material confirmed by the confirmation operation, and the generation prompt information is used for prompting that the generation of the media content is completed.

In a fifth aspect, an embodiment of the present disclosure further provides an electronic device, including:
one or more processors; and
a memory, configured to store one or more programs,
when the one or more programs are executed by the one or more processors, the one or more processors are caused to implement the method of displaying interactive information or the method of generating media content according to embodiments of the present disclosure.

In a sixth aspect, an embodiment of the present disclosure further provides a computer-readable storage medium having a computer program stored thereon, when the program is executed by a processor, the method of displaying interactive information or the method of generating media content according to embodiments of the present disclosure is implemented.

In a seventh aspect, an embodiment of the present disclosure further provides a computer program product, when the computer program product is executed by a computer, the computer is caused to implement the method of displaying interactive information or the method of generating media content according to embodiments of the present disclosure.

The embodiments of the present disclosure provide a method and apparatus of displaying interactive information, a method and apparatus of generating media content, an electronic device, a storage medium, and a program product.

The method of displaying interactive information includes: receiving a first display operation for media content; and in response to the first display operation, displaying a media content image of the media content and displaying at least part of associated interactive information of the media content image, where an associated image element of the associated interactive information is presented in the media content image, the associated interactive information is displayed at an associated display position of the associated image element corresponding to the associated interactive information, and the associated image element of the associated interactive information is set by a content provider of the associated interactive information.

The method of generating media content includes: in response to a material display operation, displaying a material interface where at least one candidate material is displayed in the material interface, and the candidate material is obtained by shooting in a single view angle; and in response to a confirmation operation acted on the material interface, displaying generation prompt information of media content, where the media content is a panoramic video generated based on an original material, the media content supports displaying interactive information at an associated display position of an associated image element corresponding to the interactive information, the original material is a candidate material confirmed by the confirmation operation, and the generation prompt information is used for prompting that the generation of the media content is completed.

### BRIEF DESCRIPTION OF DRAWINGS

The above and other features, advantages and aspects of various embodiments of the present disclosure will become more apparent when taken in conjunction with the drawings and with reference to the following detailed description. Throughout the drawings, the same or similar reference numbers refer to the same or similar elements. It should be understood that the drawings are schematic and that the components and elements are not necessarily drawn to scale.
Fig. 1 is a schematic flowchart of a method of displaying interactive information provided by an embodiment of the present disclosure;
Fig. 2 is a schematic diagram of displaying associated interactive information provided by an embodiment of the present disclosure;
Fig. 3 is a schematic flowchart of another method of displaying interactive information provided by an embodiment of the present disclosure;
Fig. 4 is a schematic diagram of displaying detailed information provided by an embodiment of the present disclosure;
Fig. 5 is a schematic flowchart of a method of generating media content provided by an embodiment of the present disclosure;
Fig. 6 is a schematic diagram of a process of generating media content provided by an embodiment of the present disclosure;
Fig. 7 is a schematic diagram of a process of generating a panoramic picture provided by an embodiment of the present disclosure;
Fig. 8 is a structural block diagram of an apparatus of displaying interactive information provided by an embodiment of the present disclosure;
Fig. 9 is a structural block diagram of an apparatus of generating media content provided by an embodiment of the present disclosure; and
Fig. 10 is a schematic structural diagram of an electronic device provided by an embodiment of the present disclosure.

### DETAILED DESCRIPTION

Embodiments of the present disclosure are described in more detail hereinafter with reference to the drawings. The drawings illustrate some embodiments of the present disclosure, but it should be understood that the present disclosure may be implemented in various manners and should not be limited to the embodiments set forth herein. Instead, these embodiments are provided for more thorough and complete understanding of the present disclosure. It should be understood that the drawings and embodiments of the present disclosure are only for illustrative purposes and are not intended to limit the protection scope of the present disclosure.

It should be understood that steps described in method implementations of the present disclosure may be performed in different orders and/or in parallel. Furthermore, the method implementations may include additional steps and/or omit the implementation of some shown steps. The scope of the present disclosure is not limited in this respect.

The term "include/comprise" and variations thereof used herein are open-ended inclusions, that is, "include/comprise but not limited to". The term "based on" is "at least partially based on". The term "an embodiment" means "at least one embodiment"; the term "another embodiment" means "at least one other embodiment"; the term "some embodiments" means "at least some embodiments". Related definitions of other terms are given in the description hereinafter.

It should be noted that concepts such as "first" and "second" mentioned in the present disclosure are merely used to distinguish between different apparatus, modules or units, and are not used to limit the order or interrelationship of functions performed by these apparatus, modules or units.

It should be noted that modifications of "a" and "a plurality of" mentioned in the present disclosure are illustrative rather than restrictive, and those skilled in the art should understand that unless explicitly indicated in the context, they should be understood as "one or more".

The names of messages or information exchanged between a plurality of apparatus according to implementations of the present disclosure are only for illustrative purposes, and are not intended to limit the scope of these messages or information.

It may be understood that data involved in the technical solution (including but not limited to the data itself, acquisition or use of the data) should comply with requirements of corresponding laws, regulations and related provisions.

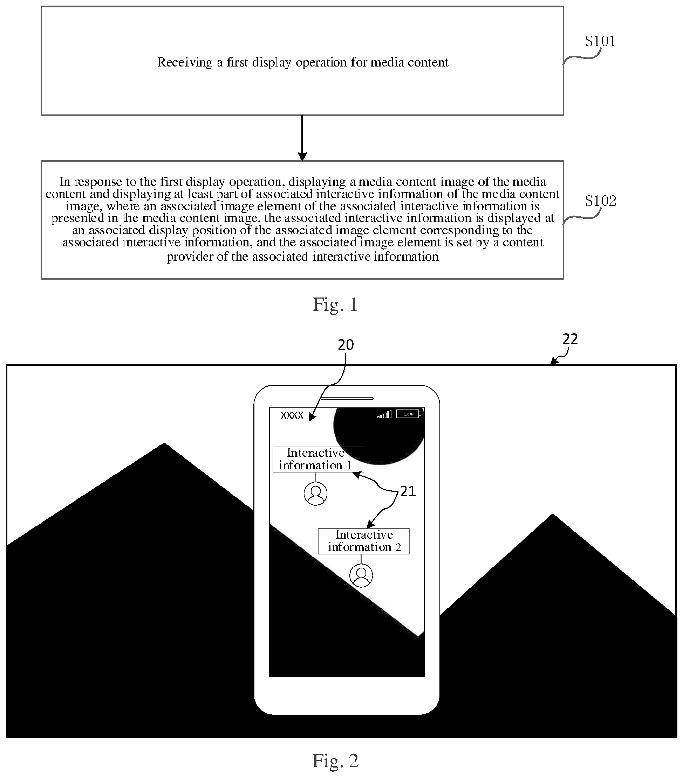

Fig. 1 is a schematic flowchart of a method of displaying interactive information provided by an embodiment of the present disclosure. The method is applied to a first application, and may be performed by an apparatus of displaying interactive information, where the apparatus may be implemented by software and/or hardware, and may be configured in an electronic device, for example, a mobile phone or a tablet computer. The method of displaying interactive information provided by the embodiment of the present disclosure is applicable to a scenario of displaying interactive information of media content, and is particularly applicable to a scenario of displaying bullet screen information of media content. As shown in Fig. 1, the method of displaying interactive information provided by the embodiment may include:
S101, receiving a first display operation for media content.

The media content may be media content corresponding to the first display operation, such as media content instructed to display by the first display operation. The type of the media content is not limited, for example, the media content may include video content and/or picture-text content. The video content may include panoramic video and/or non-panoramic video. Optionally, the media content includes a panoramic video, so that when the interactive information is subsequently displayed, a visual effect that the interactive information is located in the panoramic space corresponding to the panoramic video may be presented, for example, the display angle of view of the interactive information is switched with the switching of the display angle of view of the panoramic video, thereby further improving the display effect of the interactive information. The first display operation may be a trigger operation used to instruct to display certain media content, such as a play operation for the certain media content.

Specifically, when the current user wants to view certain media content, the current user may perform the first display operation for the media content. Accordingly, the first application may receive the first display operation performed by the current user.

In the present embodiment, the current user who performs the first display operation and the content provider of the media content may be the same or different users. For example, the user may be supported to view the media content posted by the user by performing the first display operation, or the user may be supported to view the media content posted by other users by performing the first display operation.

For the case where the current user views the media content posted by the current user by performing the first display operation, the media content viewed by the user may be posted by the current user. For example, the current user may trigger the generation of the to-be-posted media content through the first application or an application other than the first application, and/or the current user may post the media content through the first application or an application other than the first application. In this case, the application used by the current user to trigger the generation of the media content and the application used by the current user to post the media content may be the same or different applications.

In some implementations, for the case where the media content viewed by the current user is the media content posted by the current user, exemplarily, the current user may trigger the generation of the to-be-posted media content through a second application, for example, the to-be-posted media content is generated by the second application or a server corresponding to the second application; and the media content generated by triggering the second application may be posted through the first application. For example, the second application may call the first application to post the media content, thereby further shortening the posting path of the media content generated by triggering the second application.

Optionally, the media content is generated by triggering a second application, and before the receiving a first display operation for the media content, the method further includes: in response to a posting interface display instruction for the media content, displaying a posting interface of the media content, where the posting interface display instruction is generated by the second application; and in response to a media content post operation acted on the posting interface, posting the media content.

The second application and the first application may be the same or different applications. In the following, the case where the second application and the first application are different applications is used as an example for illustration. For example, the first application may be an application that supports displaying and posting media content, such as a video application; the second application may be an application that supports shooting and creating media content, such as a video editing application. The posting interface display instruction may be an instruction used to instruct the first application to display the posting interface of the media content is generated by triggering the second application. The media content post operation may be a trigger operation used to instruct to post the media content. The execution manner of the media content post operation is not limited, for example, the media content post operation may be an operation of triggering a media content posting control or a preset slide gesture operation.

Exemplarily, after triggering the generation of certain media content, the second application may generate the posting interface display instruction for the media content, and instruct the first application to display the posting interface of the media content through the posting interface display instruction, for example, instruct the first application installed in the electronic device installed with the second application to display the posting interface of the media content.

Accordingly, the first application may display the posting interface of the media content generated by triggering the second application in response to the posting interface display instruction generated by the second application; and when receiving the media content post operation acted on the posting interface, the first application posts the media content generated by triggering the second application in response to the media content post operation.

S102, in response to the first display operation, displaying a media content image of the media content and displaying at least part of associated interactive information of the media content image, where an associated image element of the associated interactive information is presented in the media content image, the associated interactive information is displayed at an associated display position of the associated image element corresponding to the associated interactive information, and the associated image element is set by a content provider of the associated interactive information.

The media content image may be understood as a currently displayed media content image, which may change with the display of the media content.

The associated interactive information may be interactive information associated with the currently displayed media content image. The type of the interactive information is not limited, for example, the interactive information may include bullet screen information and/or comment information, etc. In the following, the case where the interactive information is bullet screen information is used as an example for illustration.

Certain interactive information being associated with a certain media content image may be understood as that the associated image element of the interactive information is presented in the media content image. The associated image element of the interactive information may be an image element associated with the interactive information, for example, the display position of the interactive information may be the associated display position of the associated image element of the interactive information. The associated image element of the interactive information may be set by the content provider of the interactive information, for example, the content provider may set the associated image element of the interactive information in the media content image before or after posting the interactive information. The setting manner of the associated image element is not limited.

The associated display position of the associated image element may be understood as a position associated with the display position of the associated image element, such as a certain position within a preset distance range from the display position of the associated image element. The certain position may, for example, overlap with the display position of the associated image element, or be located above, below, left or right of the display position of the associated image element. The image element may be understood as an element in the media content image, such as an image of a certain person presented in the media content image, or an element point presented in the media content image, etc.

Specifically, when the first display operation for the media content is received, the media content image 20 of the media content may be displayed in response to the first display operation, and at least part of associated interactive information 21 of the currently displayed media content may be displayed based on the display position of the associated image element of the associated interactive information 21 in the media content image 20. For example, for at least part of associated interactive information 21 of the media content image 20, the associated interactive information 21 may be displayed at the associated display position of the associated image element of the associated interactive information 21, as shown in Fig. 2 (media content is a panoramic video in the figure as an example).

The manner of displaying the associated interactive information 21 at an associated display position is not limited, for example, the user identifier of the content provider who posts the associated interactive information 21 and/or at least part of information content of the associated interactive information may be displayed at the associated display position. Exemplarily, as shown in Fig. 2, the user identifier of the content provider who posts the associated interactive information 21 may be displayed, and at least part of information content of the associated interactive information may be displayed above the user identifier of the content provider. The user identifier of the content provider may be understood as the identifier of the content provider, such as the avatar and/or nickname of the content provider.

When the media content is a panoramic video, as shown in Fig. 2, the currently displayed media content image 20 may be an image in a part of image area of a panoramic picture 22 corresponding to the panoramic video. For the interactive information (not shown in Fig. 2) of which the associated image element is not currently presented in the media content image 20, the first application may not display the interactive information. It should be noted that the panoramic picture 22 is actually presented in a spherical form, and in Fig. 2, it is shown in a plane form only for the convenience of showing the image in the panoramic picture 22.

It may be understood that the interactive information is displayed at the associated display position of the associated image element of the interactive information. With the display of the media content, when the display position and/or display angle of view of the associated image element of the interactive information change, the display position and/or display angle of view of the interactive information also change accordingly. With the display of the media content, when the associated image element of the interactive information moves out of the display area of the screen, in other words, when the associated image element of the interactive information is no longer presented in the media content image, the display of the interactive information may be canceled.

In some implementations, for each associated image element presented in the media content image, when the associated interactive information is displayed at the associated display position of the associated image element, one or more pieces of associated interactive information corresponding to the associated image element may be displayed at the associated display position, and the one or more pieces of associated interactive information that are displayed and correspond to the associated image element may not be switched during the display of the media content. For example, when the associated image element is presented, the associated interactive information displayed at the associated display position of the associated image element remains unchanged. In this case, optionally, the displaying at least part of associated interactive information of the media content image includes: displaying associated interactive information corresponding to an associated image element at an associated display position of the associated image element, where the displayed associated interactive information remains unchanged.

In some implementations, for each associated image element presented in the media content image, when the associated interactive information is displayed at the associated display position of the associated image element, different pieces of associated interactive information corresponding to the associated image element may be switched and displayed at the associated display position, for example, the associated interactive information displayed at the associated display position is switched according to a preset switching duration, so as to facilitate the user to view. In this case, optionally, the displaying at least part of associated interactive information of the media content image includes: switching and displaying different pieces of associated interactive information corresponding to an associated image element at an associated display position of the associated image element.

According to the method of displaying interactive information provided in the present embodiment, the first display operation for the media content is received; and in response to the first display operation, the media content image of the media content is displayed and at least part of associated interactive information of the media content image is displayed, where an associated image element of the associated interactive information is presented in the media content image, the associated interactive information is displayed at an associated display position of the associated image element corresponding to the associated interactive information, and the associated image element of the associated interactive information is set by the content provider of the associated interactive information. With the above technical solution, the present embodiment supports the content provider to set the associated image element of the posted interactive information in the media content image, and supports displaying the interactive information posted by the content provider at the display position of the associated image element, which may enrich the display modes of the interactive information and meet different display requirements of users for the interactive information.

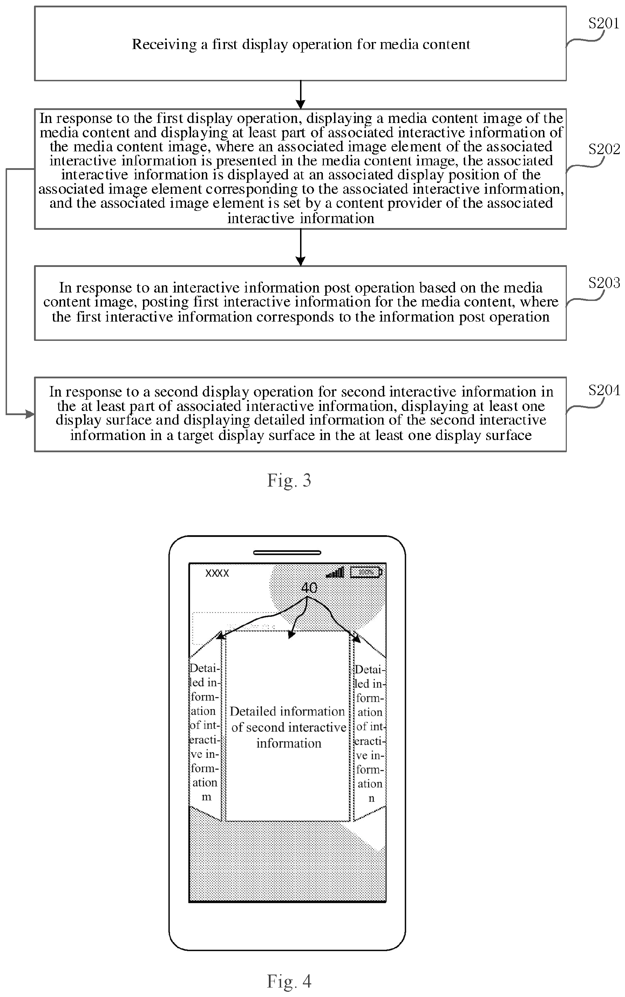

Fig. 3 is a schematic flowchart of another method of displaying interactive information provided by an embodiment of the present disclosure. The solution in the present embodiment may be combined with one or more optional solutions in the above embodiment. Optionally, after the displaying a media content image of the media content and displaying at least part of associated interactive information of the media content image, the method further includes at least one of the following: in response to an interactive information post operation based on the media content image, posting first interactive information for the media content, where the first interactive information corresponds to the information post operation; and in response to a second display operation for second interactive information in the at least part of associated interactive information, displaying at least one display surface and displaying detailed information of the second interactive information in a target display surface in the at least one display surface.

Accordingly, as shown in Fig. 3, the method of displaying interactive information provided by the present embodiment may include:
S201, receiving a first display operation for media content.
S202, in response to the first display operation, displaying a media content image of the media content, displaying at least part of associated interactive information of the media content image, and performing S203 and/or S204, where an associated image element of the associated interactive information is presented in the media content image, the associated interactive information is displayed at an associated display position of the associated image element corresponding to the associated interactive information, and the associated image element is set by a content provider of the associated interactive information.
S203, in response to an interactive information post operation based on the media content image, posting first interactive information for the media content, where the first interactive information corresponds to the information post operation.

The interactive information post operation may be a trigger operation used to instruct to post the interactive information for the currently displayed media content. The interactive information post operation may be performed based on the currently displayed media content image. The execution manner of the interactive information post operation is not limited, for example, the interactive information post operation may be an operation of triggering an interactive information posting control or a preset slide operation. The first interactive information may be understood as interactive information instructed to post by the interactive information post operation. The type of the information content of the first interactive information is not limited, for example, the information content of the first interactive information may include text content, image content, and/or a link, etc. The link may support triggering to display the interface or content corresponding to the link.

In the present embodiment, when certain media content is displayed, the user may be supported to post the interactive information based on the media content image of the media content, for example, the user is supported to enter the posting process of the interactive information by triggering the media content image of the media content, so as to further enrich the posting modes of the interactive information.

Specifically, when the interactive information post operation based on the media content image is received, the first interactive information for the media content to which the media content image belongs may be posted in response to the interactive information post operation, for example, new interactive information associated with the media content image is posted.

In some implementations, before the in response to interactive information post operation based on the media content image, posting the first interactive information for the media content, the method further includes: in response to a first trigger operation acted on the media content image, displaying an information input area, where the information input area is used for a user to input information content of the first interactive information.

The first trigger operation may be an operation of triggering the media content image, which may be a trigger operation acted on any image position of the currently displayed media content image.

In the above implementation, the information content of the first interactive information may be input by the current user. For example, when receiving the first trigger operation acted on the media content image, the first application may display the information input area for the current user to input the information content of the to-be-posted first interactive information into the information input area. Thus, when the interactive information post operation from the current user is received, the information content input by the current user in the information input area may be acquired as the information content of the first interactive information, and the first interactive information is posted.

In some implementations, before the in response to the interactive information post operation based on the media content image, posting the first interactive information for the media content, the method further includes: in response to a second trigger operation acted on the media content image, using a first image element in the media content image as an associated image element of the first interactive information, where the first image element corresponds to the second trigger operation.

The first image element may be an image element corresponding to the second trigger operation in the media content image. The second trigger operation may be a trigger operation for setting the associated image element of the first interactive information. The execution manner of the second trigger operation is not limited, for example, the second trigger operation may be an operation of triggering a certain position of the media content image. In this case, the first image element may be an image element displayed at the trigger position of the second trigger operation in the media content image, such as an image object (such as a person) displayed at the trigger position of the second trigger operation or an element point displayed at the trigger position of the second trigger operation. The second trigger operation may also be an operation of inputting certain position coordinates. In this case, the first image element may be an image element located at the position coordinates in the media content image, such as an image object (such as a person) or an element point located at the position coordinates. The second trigger operation may also be a box selection operation acted on the media content image. In this case, the first image element may be at least part of image elements displayed in the area selected by the box selection operation, etc. The second trigger operation and the first trigger operation may be the same or different operations. When the second trigger operation and the first trigger operation are the same operation, the first trigger operation may be used to instruct to determine the associated image element of the first interactive information and the information input area.

In the above implementation, before posting the first interactive information for the media content, the current user may also perform the second trigger operation to set the associated image element of the first interactive information in the media content image. Exemplarily, the current user may anchor any area or any position of the media content image to post the interactive information, so as to combine the displayed media content image with the interaction. For example, when receiving the second trigger operation acted on the media content image by the current user, the first application may determine the image element corresponding to the second trigger operation in the media content image as the associated image element of the first interactive information.

S204, in response to a second display operation for second interactive information in the at least part of associated interactive information, displaying at least one display surface and displaying detailed information of the second interactive information in a target display surface in the at least one display surface.

The second display operation may be a trigger operation used to instruct to display the detailed information of certain interactive information. The execution manner of the second display operation is not limited, for example, the second display operation may be an operation of clicking or double-clicking on a certain piece of displayed associated interactive information. The second interactive information may be associated interactive information corresponding to the second display operation, such as associated interactive information instructed to display the detailed information of the associated interactive information by the second display operation.

The display surface may be a flat surface or a curved surface used to display the detailed information of the interactive information. Different display surfaces may be used to display different detailed information of the same piece of associated interactive information (such as the second interactive information), and/or different display surfaces may be used to display the detailed information of different pieces of associated interactive information, etc. In the following, the case where different display surfaces are used to display the detailed information of different pieces of associated interactive information is used as an example for illustration. The target display surface may be a display surface used to display the detailed information of the second interactive information. The position of the target display surface in the at least one displayed display surface is not limited. Exemplarily, the target display surface may be a display surface parallel to the plane of the screen in the at least one display surface.

Exemplarily, when the second display operation for the second interactive information in the at least part of displayed associated interactive information is received, for example, when it is detected that the current user triggers a certain piece of displayed associated interactive information, the at least one display surface 40 may be displayed, and the detailed information of the second interactive information may be displayed in the target display surface in the at least one display surface 40, for example, the detailed information of the second interactive information is displayed in the display surface 40 (i.e., the target display surface) parallel to the plane of the screen, as shown in Fig. 4.

In the present embodiment, the display mode of the at least one display surface is not limited, for example, the at least one display surface may be continuously arranged along a preset direction, such as continuously arranged in the clockwise direction or the counterclockwise direction, and a preset angle may be formed between two adjacent display surfaces, that is, the adjacent display surfaces in the at least one display surface are arranged at a preset angle. The preset angle may be greater than 0° and less than or equal to 180°, and the specific value may be flexibly set according to the needs.

In some implementations, after the displaying at least one display surface, the method further includes: in response to a switching operation for the display surface, switching a currently displayed display surface by controlling the at least one display surface to rotate, where different display surfaces are used to display detailed information of different pieces of associated interactive information corresponding to a second image element, and the second image element is an associated image element of the second interactive information.

The switching operation may be a trigger operation used to instruct to switch the currently displayed display surface, and the execution manner of the switching operation is not limited. Taking the case where the at least one displayed display surface is parallel to the display direction of the media content and the arrangement direction of the at least one display surface is perpendicular to the display direction of the media content as an example, the switching operation may include a horizontal sliding operation. The second image element is an associated image element of the second interactive information. The associated interactive information corresponding to the second image element may be understood as associated interactive information of which associated image element is the second image element.

In the above implementation, different display surfaces may be used to display the detailed information of different pieces of associated interactive information corresponding to the second image element, and the user may be supported to switch the currently displayed display surface by performing the switching operation, so as to view the detailed information of different pieces of associated interactive information.

Exemplarily, when the switching operation for the display surface is received, for example, when the horizontal sliding operation from the current user is received, the at least one displayed display surface may be controlled to rotate along the rotation direction (such as the clockwise direction or the counterclockwise direction) corresponding to the switching operation, so as to switch the currently displayed display surface, thereby switching the currently displayed detailed information for the current user to view. Here, each display surface may rotate along the same rotation axis, for example, each display surface rotates synchronously along the same rotation axis.

According to the method of displaying interactive information provided in the present embodiment, the user is supported to post the interactive information based on the displayed media content image, and/or the detailed information of the interactive information is displayed in the display surface, which may further enrich the posting and display modes of the interactive information, and improve the user experience.

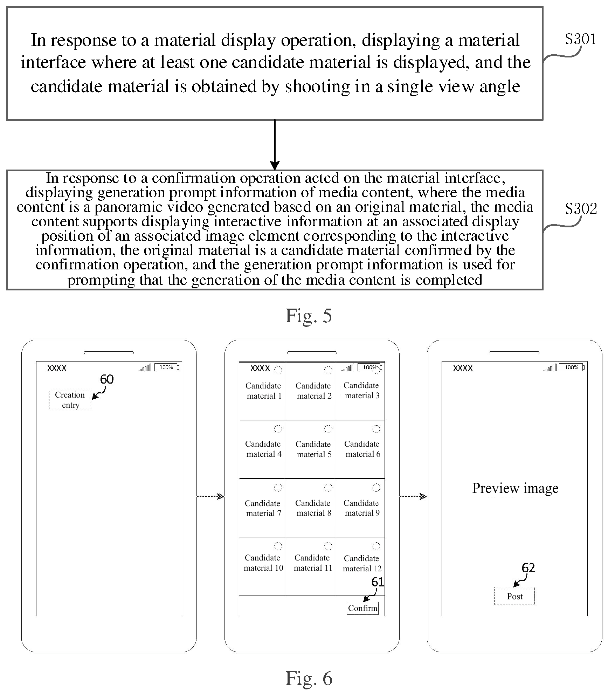

Fig. 5 is a schematic flowchart of a method of generating media content provided by an embodiment of the present disclosure. The method is applied to a second application and may be performed by an apparatus of generating media content, where the apparatus may be implemented by software and/or hardware, and may be configured in an electronic device, for example, in a mobile phone or a tablet computer. The method of generating media content provided by the embodiment of the present disclosure is applicable to the scenario of generating media content, and is particularly applicable to the scenario of generating a panoramic video based on a material obtained by shooting in a single view angle. As shown in Fig. 5, the method of generating media content provided by the present embodiment may include:
S301, in response to a material display operation, displaying a material interface, where at least one candidate material is displayed in the material interface, and the candidate material is obtained by shooting in a single view angle.

The material display operation may be a trigger operation used to instruct to display candidate materials. The execution manner of the material display operation is not limited, exemplarily, the material display operation may be an operation of triggering a creation entry of a panoramic video. The material interface may be a display interface of candidate materials, and at least one candidate material may be displayed in the material interface. The candidate material is a material that may be selected by the user. The type of the candidate material is not limited, for example, the candidate material may be a picture material or a video material. In the following, the case where the candidate material is a picture material is used as an example for illustration. The candidate material is obtained by shooting in a single view angle, for example, by shooting with a non-panoramic camera.

Exemplarily, when the material display operation is received, for example, when it is detected that the current user triggers the creation entry 60 (as shown in the first figure in Fig. 6) of the panoramic video, the material interface may be displayed and the at least one candidate material may be displayed in the material interface, as shown in the second figure in Fig. 6, for the current user to select.

S302, in response to a confirmation operation acted on the material interface, displaying generation prompt information of media content, where the media content is a panoramic video generated based on an original material, the media content supports displaying interactive information at an associated display position of an associated image element corresponding to the interactive information, the original material is a candidate material confirmed by the confirmation operation, and the generation prompt information is used for prompting that the generation of the media content is completed.

The confirmation operation may be a trigger operation for confirming to use the selected candidate material to generate the panoramic video. The execution manner of the confirmation operation is not limited, exemplarily, the confirmation operation may be an operation of triggering a confirmation control in the material interface or a certain slide operation acted on the material interface.

The original material may be a candidate material confirmed by the confirmation operation, such as a candidate material in the selected state in the material interface. The number of original materials may be one or more. In the following, the case where the number of original materials is one is used as an example for illustration.

The media content may be a panoramic video generated based on the original material. The media content supports displaying the interactive information at the associated display position of the associated image element corresponding to the interactive information. It may be understood that the media content may also support displaying the interactive information in a display mode in the prior art.

The generation prompt information may be information used to prompt that the generation of the media content is completed. The generation prompt information may be prompted by text and/or image. Optionally, the generation prompt information includes a preview image of the panoramic video. In this case, the user may be prompted that the generation of the media content is completed by displaying the preview image of the generated media content.

Specifically, when the confirmation operation acted on the material interface is received, for example, when it is detected that the current user triggers the confirmation control 61 (as shown in the second figure in Fig. 6) in the material interface, the generation of the media content (such as the panoramic video) may be triggered based on the original material selected by the user, and after the generation of the media content is completed, the generation prompt information of the media content may be displayed. For example, the preview image of the generated media content may be displayed, as shown in the third figure in Fig. 6, to prompt the current user that the generation of the media content is completed.

In the present embodiment, the manner of triggering the generation of the media content based on the original material selected by the user is not limited, for example, the second application may be triggered to generate the media content based on the original material selected by the user, or the server corresponding to the second application may be triggered to generate the media content based on the original material selected by the user. The generation manner used when the media content is generated by the second application and the generation manner used when the media content is generated by the server may be the same or different, which may be specifically set according to the needs. In the present embodiment, the case where the second application generates the media content based on the original material selected by the user is used as an example for illustration.

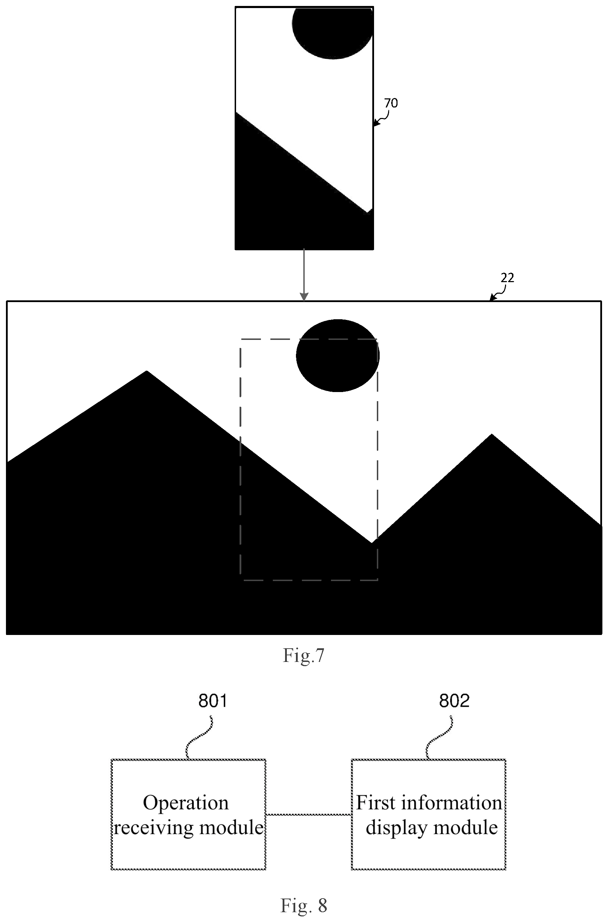

In some implementations, before the generation prompt information of the media content is displayed, the media content may be generated based on the original material 70 selected by the user. Exemplarily, the original material 70 may be expanded into a panoramic picture 22 by a preset image expansion algorithm, as shown in Fig. 7 (the picture located in the dotted line frame in the panoramic picture 22 in Fig. 7 is the original picture in the original material). A panoramic image sequence frame is generated according to the panoramic picture 22, and a panoramic video is generated based on the generated panoramic image sequence frame as the generated media content.

In this case, optionally, before the displaying generation prompt information of the media content, the method further includes: expanding the original material into a panoramic picture and generating a panoramic image sequence frame according to the panoramic picture; and generating the media content based on the panoramic image sequence frame.

The preset image expansion algorithm may be an existing image expansion algorithm, for example, the existing image expansion algorithm may be used to expand the original material selected by the user into a panoramic picture. It should be noted that in the case where the preset image expansion algorithm is the existing image expansion algorithm, the existing image expansion algorithm is generally only used to expand to obtain a flat picture, but not to generate a panoramic picture. In the present embodiment, the preset image expansion algorithm is used to expand to obtain the panoramic picture, which may enrich the generation manners of the panoramic picture. The size of the expanded panoramic picture is not limited, exemplarily, the size of the expanded panoramic picture may be 8K·16000·8000px.

The panoramic image sequence frame may be used to generate the video frame of the panoramic video, and the generation manner of the sequence frame of the panoramic picture may be set according to the needs, for example, different areas of the panoramic picture may be successively clipped and processed to obtain the panoramic image sequence frame.

After the panoramic image sequence frame is obtained, the panoramic video may be generated based on the panoramic image sequence frame. For example, in combination with motion estimation and compensation technology, the long encoder may be used to convert the panoramic image sequence frame into the video frame of the panoramic video, thereby obtaining the panoramic video.

In some implementations, the angle of view of the panoramic video is switched with the angle of view of a target object, and before the generating panoramic image sequence frame according to the panoramic picture, the method further includes: extracting the target object presented in the material image of the original material and generating a dynamic model of the target object; and the generating panoramic image sequence frame according to the panoramic picture includes: generating the panoramic image sequence frame according to the panoramic picture and the dynamic model.

The target object may be a certain object presented in the original material, which may be an object of a preset type, such as a person presented in the original material. The dynamic model may be a model that describes the movement process of the target object in the panoramic video, and the movement process may include but not limited to a moving process and/or a rotating process.

In the above implementation, the angle of view of the panoramic video may be switched with the switching of the angle of view of the target object in the original material, so as to further improve the display effect of the panoramic video and present an immersive atmosphere of watching the panoramic video to the user.

Exemplarily, deep learning and action recognition technology may be used to extract the target object in the original material and generate the dynamic model of the target object. For example, the person in the original material may be extracted as the target object; and the action and posture of the target object are adjusted and bound by three-dimensional modeling technology to generate the dynamic model of the target object. Thus, the panoramic image sequence frame may be generated according to the generated panoramic picture and the dynamic model.

In addition, during the generation process of the panoramic video, a soundtrack may also be added to the panoramic video, and/or a smooth camera movement mode may be generated according to the background environment of the panoramic picture, so as to improve the fluency of images in the panoramic video and ensure that the target object may stably move and/or rotate in the panoramic video, thereby further improving the presentation effect of the panoramic video.

In the present embodiment, after the generation of the media content is completed, the generated media content may be triggered to post based on the trigger operation from the current user. For example, the second application may post the media content based on the trigger operation from the current user, or the first application is instructed to post the media content based on the trigger operation from the current user.

For the case of instructing the first application to post the media content, optionally, after the displaying generation prompt information of the media content, the method further includes: in response to an instruction generation operation, generating a posting interface display instruction for the media content, where the posting interface display instruction is used to instruct a first application to display a posting interface of the media content, and the posting interface is used to post the media content.

The instruction generation operation may be an operation used to instruct to generate the posting interface display instruction. The execution manner of the instruction generation operation is not limited, exemplarily, the instruction generation operation may be an operation of triggering an instruction generation control displayed by the second application or an operation of performing a certain preset gesture. The posting interface display instruction may be used to instruct the first media content to display the posting interface of the media content, so as to post the media content.

Exemplarily, when receiving the instruction generation operation, for example, when detecting that the current user triggers the instruction generation control 62 (as shown in the third figure in Fig. 6) displayed by the second application, the second application may generate the posting interface display instruction for the media content, and instruct the first application to display the posting interface of the media content through the posting interface display instruction.

Accordingly, the first application may display the posting interface of the media content generated by triggering the second application in response to the posting interface display instruction generated by the second application; and when receiving the media content post operation acted on the posting interface, the first application posts the media content generated by triggering the second application in response to the media content post operation.

According to the method of generating media content provided by the present embodiment, the material interface is displayed in response to the material display operation, where the at least one candidate material is displayed in the material interface, and the candidate material is obtained by shooting in the single view angle; and the generation prompt information of the media content is displayed in response to the confirmation operation acted on the material interface, where the media content is the panoramic video generated based on the original material, the media content supports displaying the interactive information at the associated display position of the associated image element corresponding to the interactive information, the original material is the candidate material confirmed by the confirmation operation, and the generation prompt information is used for prompting that the generation of the media content is completed. With the above technical solution, the present embodiment uses the original material obtained by shooting in the single view angle to generate the panoramic media content, and supports displaying the interactive information at the associated display position of the associated image element corresponding to the interactive information when the media content is displayed, which may enrich the generation manners of the media content and the display manners of the interactive information, reduce the difficulty in generating the panoramic media content, and improve the utilization rate of the material obtained by shooting in the single view angle.

Fig. 8 is a structural block diagram of an apparatus of displaying interactive information provided by an embodiment of the present disclosure. The apparatus is configured in a first application, where the apparatus may be implemented by software and/or hardware, and may be configured in an electronic device, for example, in a mobile phone or a tablet computer. The apparatus may display the interactive information of the media content, such as the bullet screen information of the media content, by performing the method of displaying interactive information. As shown in Fig. 8, the apparatus of displaying interactive information provided by the present embodiment may include: an operation receiving module 801 and a first information display module 802, where,
the operation receiving module 801 is configured to receive a first display operation for media content; and
the first information display module 802 is configured to, in response to the first display operation, display a media content image of the media content and display at least part of associated interactive information of the media content image, where an associated image element of the associated interactive information is presented in the media content image, the associated interactive information is displayed at an associated display position of the associated image element corresponding to the associated interactive information, and the associated image element is set by a content provider of the associated interactive information.

The apparatus of displaying interactive information provided by the present embodiment receives the first display operation for the media content through the operation receiving module; and through the first information display module, in response to the first display operation, displays the media content image of the media content and displays at least part of associated interactive information of the media content image, where the associated image element of the associated interactive information is presented in the media content image, the associated interactive information is displayed at the associated display position of the associated image element corresponding to the associated interactive information, and the associated image element of the associated interactive information is set by the content provider of the associated interactive information. With the above technical solution, the present embodiment supports the content provider to set the associated image element of the posted interactive information in the media content image, and supports displaying the interactive information posted by the content provider at the display position of the associated image element, which may enrich the display modes of the interactive information and meet different display requirements of users for the interactive information.

Optionally, the media content includes a panoramic video.

Further, the apparatus of displaying interactive information provided by the present embodiment may further include at least one of the following: an information posting module, configured to, after the displaying media content image of the media content and displaying at least part of associated interactive information of the media content image, in response to an interactive information post operation based on the media content image, post first interactive information for the media content, where the first interactive information corresponds to the information post operation; and a second information display module, configured to, after the displaying media content image of the media content and displaying at least part of associated interactive information of the media content image, in response to a second display operation for second interactive information in the at least part of associated interactive information, display at least one display surface and display detailed information of the second interactive information in a target display surface in the at least one display surface.

Further, the apparatus of displaying interactive information provided by the present embodiment may further include at least one of the following: an area display module, configured to, before the posting first interactive information for the media content in response to the interactive information post operation based on the media content image, in response to a first trigger operation acted on the media content image, display an information input area, where the information input area is used for the user to input information content of the first interactive information; and an element determination module, configured to, before the posting first interactive information for the media content in response to the interactive information post operation based on the media content image, in response to a second trigger operation acted on the media content image, use a first image element in the media content image as an associated image element of the first interactive information, where the first image element corresponds to the second trigger operation.

Further, the apparatus of displaying interactive information provided by the present embodiment may further include: a display surface switching module, configured to, after the displaying at least one display surface, in response to a switching operation for the display surface, switch a currently displayed display surface by controlling the at least one display surface to rotate, where different display surfaces are used to display detailed information of different pieces of associated interactive information corresponding to a second image element, and the second image element is an associated image element of the second interactive information.

Optionally, adjacent display surfaces in the at least one display surface are arranged at a preset angle.

Optionally, the first information display module 802 is configured to: display associated interactive information corresponding to the associated image element at the associated display position of the associated image element, where the displayed associated interactive information remains unchanged; or switch and display different pieces of associated interactive information corresponding to the associated image element at the associated display position of the associated image element.

Optionally, the media content is generated by triggering a second application, and the apparatus of displaying interactive information provided by the present embodiment may further include: an interface display module, configured to, before the receiving a first display operation for the media content, in response to a posting interface display instruction for the media content, display a posting interface of the media content, where the posting interface display instruction is generated by the second application; and a content posting module, configured to post the media content in response to a media content post operation acted on the posting interface.

The apparatus of displaying interactive information provided by the embodiment of the present disclosure may perform the method of displaying interactive information provided by any embodiment of the present disclosure, and has the corresponding functional modules and beneficial effects for performing the method of displaying interactive information. For the technical details not described in detail in the present embodiment, reference may be made to the method of displaying interactive information provided by any embodiment of the present disclosure.

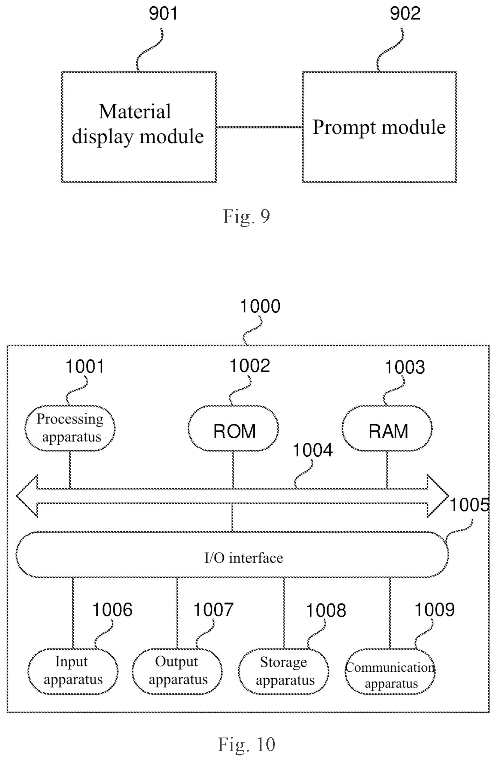

Fig. 9 is a structural block diagram of an apparatus of generating media content provided by an embodiment of the present disclosure. The apparatus is configured in a second application, where the apparatus may be implemented by software and/or hardware, and may be configured in an electronic device, for example, in a mobile phone or a tablet computer. The apparatus may generate the media content by performing the method of generating media content, for example, generate a panoramic video based on a material obtained by shooting in a single view angle. As shown in Fig. 9, the apparatus of generating media content provided by the present embodiment may include: a material display module 901 and a prompt module 902, where,
the material display module 901 is configured to, in response to a material display operation, display a material interface where at least one candidate material is displayed in the material interface, and the candidate material is obtained by shooting in the single view angle; and
the prompt module 902 is configured to, in response to a confirmation operation acted on the material interface, display generation prompt information of media content, where the media content is a panoramic video generated based on an original material, the media content supports displaying interactive information at an associated display position of an associated image element corresponding to the interactive information, the original material is a candidate material confirmed by the confirmation operation, and the generation prompt information is used for prompting that the generation of the media content is completed.

The apparatus of generating media content provided by the present embodiment displays the material interface through the material display module in response to the material display operation, where the at least one candidate material is displayed in the material interface, and the candidate material is obtained by shooting in the single view angle; and through the prompt module, in response to the confirmation operation acted on the material interface, displays the generation prompt information of the media content, where the media content is the panoramic video generated based on the original material, the media content supports displaying the interactive information at the associated display position of the associated image element corresponding to the interactive information, the original material is the candidate material confirmed by the confirmation operation, and the generation prompt information is used for prompting that the generation of the media content is completed. With the above technical solution, the present embodiment uses the original material obtained by shooting in the single view angle to generate the panoramic media content, and supports displaying the interactive information at the associated display position of the associated image element corresponding to the interactive information when the media content is displayed, which may enrich the generation manners of the media content and the display manners of the interactive information, reduce the difficulty in generating the panoramic media content, and improve the utilization rate of the material obtained by shooting in the single view angle.

Further, the apparatus of generating media content provided by the present embodiment may further include: a material expansion module, configured to, before the displaying generation prompt information of the media content, expand the original material into a panoramic picture and generate a panoramic image sequence frame according to the panoramic picture; and a media content generation module, configured to generate the media content based on the panoramic image sequence frame.

Optionally, a view angle of the panoramic video is switched with a view angle of a target object, and the apparatus of generating media content provided by the present embodiment may further include: a model generation module, configured to, before the generating a panoramic image sequence frame according to the panoramic picture, extract the target object presented in a material picture of the original material and generate a dynamic model of the target object; and the material expansion module may be configured to generate the panoramic image sequence frame according to the panoramic picture and the dynamic model.

Further, the apparatus of generating media content provided by the present embodiment may further include: an instruction generation module, configured to, after the displaying generation prompt information of the media content, in response to an instruction generation operation, generate a posting interface display instruction for the media content, where the posting interface display instruction is used to instruct a first application to display a posting interface of the media content, and the posting interface is used to post the media content.

Optionally, the generation prompt information includes a preview image of the panoramic video.

The apparatus of generating media content provided by the embodiment of the present disclosure may perform the method of generating media content provided by any embodiment of the present disclosure, and has the corresponding functional modules and beneficial effects for performing the method of generating media content. For the technical details not described in detail in the present embodiment, reference may be made to the method of generating media content provided by any embodiment of the present disclosure.

Reference is made to Fig. 10 below, which illustrates a schematic structural diagram of an electronic device (such as a terminal device) 1000 suitable for implementing the embodiments of the present disclosure. The terminal device in the embodiments of the present disclosure may include, but are not limited to, mobile terminals such as a mobile phone, a laptop, a digital broadcast receiver, a PDA (personal digital assistant), a PAD (tablet computer), a PMP (portable multimedia player), a vehicle-mounted terminal (such as a vehicle navigation terminal), etc., and fixed terminals such as a digital TV, a desktop computer, etc. The electronic device shown in Fig. 10 is only an example, and should not impose any limitation on the function and scope of use of the embodiments of the present disclosure.

As shown in Fig. 10, the electronic device 1000 may include a processing apparatus (such as a central processing unit, a graphics processing unit, etc.) 1001, which may perform various appropriate actions and processes according to a program stored in a read-only memory (ROM) 1002 or a program loaded from a storage apparatus 1008 into a random access memory (RAM) 1003. In the RAM 1003, various programs and data required for operations of the electronic device 1000 are also stored. The processing apparatus 1001, the ROM 1002 and the RAM 1003 are connected to each other through a bus 1004. An input/output (I/O) interface 1005 is also connected to the bus 1004.

Usually, the following apparatus may be connected to the I/O interface 1005: an input apparatus 1006 including, for example, a touch screen, a touchpad, a keyboard, a mouse, a camera, a microphone, an accelerometer, a gyroscope, etc.; an output apparatus 1007 including, for example, a liquid crystal display (LCD), a speaker, a vibrator, etc.; a storage apparatus 1008 including, for example, a magnetic tape, a hard disk, etc.; and a communication apparatus 1009. The communication apparatus 1009 may allow the electronic device 1000 to perform wireless or wired communication with other devices to exchange data. Although Fig. 10 shows the electronic device 1000 having various apparatuses, it should be understood that it is not required to implement or have all of the shown apparatuses. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program includes program code for performing the method shown in the flowchart. In such an embodiment, the computer program may be downloaded and installed from a network through the communication apparatus 1009, or installed from the storage apparatus 1008, or installed from the ROM 1002. When the computer program is executed by the processing apparatus 1001, the above-mentioned functions defined in the method of the embodiment of the present disclosure are executed.

It should be noted that the above-mentioned computer-readable medium in the present disclosure may be a computer-readable signal medium or a computer-readable storage medium or any combination of the two. The computer-readable storage medium may be, for example, but is not limited to, an electronic, magnetic, optical, electromagnetic, infrared, or semiconductor system, apparatus, device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program, which may be used by or in combination with an instruction execution system, apparatus, or device. In the present disclosure, a computer-readable signal medium may include a data signal propagated in a baseband or as a part of a carrier wave, and computer-readable program code is carried in the data signal. The data signal propagated in this manner may be in multiple forms, including but not limited to, an electromagnetic signal, an optical signal, or any suitable combination of the above. The computer-readable signal medium may also be any computer-readable medium other than the computer-readable storage medium, and the computer-readable signal medium may send, propagate, or transmit the program used by or in combination with the instruction execution system, apparatus, or device. The program code contained on the computer-readable medium may be transmitted in any suitable medium, including but not limited to: a wire, an optical cable, a radio frequency (RF), etc., or any suitable combination of the above.

In some implementations, the client and the server may communicate using any currently known or future developed network protocol, such as the HTTP (HyperText Transfer Protocol), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above-mentioned computer-readable medium may be included in the above-mentioned electronic device, or it may exist alone without being assembled into the electronic device.

The above-mentioned computer-readable medium carries one or more programs, and when the one or more programs are executed by the electronic device, the electronic device: receives a first display operation for media content; and in response to the first display operation, displays a media content image of the media content and displays at least part of associated interactive information of the media content image, where an associated image element of the associated interactive information is presented in the media content image, the associated interactive information is displayed at an associated display position of the associated image element corresponding to the associated interactive information, and the associated image element is set by a content provider of the associated interactive information; or
in response to a material display operation, displays a material interface where at least one candidate material is displayed in the material interface, and the candidate material is obtained by shooting in a single view angle; and in response to a confirmation operation acted on the material interface, displays generation prompt information of media content, where the media content is a panoramic video generated based on an original material, the media content supports displaying interactive information at an associated display position of an associated image element corresponding to the interactive information, the original material is a candidate material confirmed by the confirmation operation, and the generation prompt information is used for prompting that the generation of the media content is completed.

The computer program code for performing the operations of the present disclosure may be written in one or more programming languages or a combination thereof, where the programming languages include but are not limited to an object-oriented programming language such as Java, Smalltalk, C++, and include conventional procedural programming languages such as "C" language or similar programming languages. The program code may be executed entirely on a computer of the user, partly executed on a computer of the user, executed as an independent software package, partly executed on a computer of the user and partly executed on a remote computer, or entirely executed on a remote computer or server. In the case of involving a remote computer, the remote computer may be connected to a computer of the user through any kind of network, including a local area network (LAN) or a wide area network (WAN), or it may be connected to an external computer (for example, connected by using Internet provided by an Internet service provider).

The flowcharts and block diagrams in the drawings illustrate the architecture, functionality, and operation of possible implementations of systems, methods and computer program products according to various embodiments of the present disclosure. In this regard, each block in the flowchart or block diagrams may represent a module, program segment, or portion of code, which includes one or more executable instructions for implementing the specified logical function(s). It should also be noted that, in some alternative implementations, the functions noted in the block may occur in an order different from that noted in the drawings. For example, two blocks shown in succession may, in fact, be executed substantially concurrently, or the blocks may sometimes be executed in the reverse order, depending upon the functionality involved. It will also be noted that each block of the block diagrams and/or flowchart, and combinations of blocks in the block diagrams and/or flowchart, may be implemented by special purpose hardware-based systems that perform the specified functions or operations, or combinations of special purpose hardware and computer instructions.

The involved units described in the embodiments of the present disclosure may be implemented by software or by hardware. Among them, the name of the module does not constitute a limitation on the unit itself under certain circumstances.

The functions described herein may be performed at least in part by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logical device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, Example 1 provides a method of displaying interactive information, applied to a first application, where the method includes:
receiving a first display operation for media content; and
in response to the first display operation, displaying a media content image of the media content and displaying at least part of associated interactive information of the media content image, where an associated image element of the associated interactive information is presented in the media content image, the associated interactive information is displayed at an associated display position of the associated image element corresponding to the associated interactive information, and the associated image element is set by a content provider of the associated interactive information.

According to one or more embodiments of the present disclosure, Example 2 is the method according to Example 1, where the media content includes a panoramic video.

According to one or more embodiments of the present disclosure, Example 3 is the method according to Example 1, after the displaying media content image of the media content and displaying at least part of associated interactive information of the media content image, the method further includes at least one of the following:
in response to an interactive information post operation based on the media content image, posting first interactive information for the media content, where the first interactive information corresponds to the information post operation; and
in response to a second display operation for second interactive information in the at least part of associated interactive information, displaying at least one display surface and displaying detailed information of the second interactive information in a target display surface in the at least one display surface.

According to one or more embodiments of the present disclosure, Example 4 is the method according to Example 3, before the posting first interactive information for the media content in response to the interactive information post operation based on the media content image, the method further includes at least one of the following:
in response to a first trigger operation acted on the media content image, displaying an information input area, where the information input area is used for the user to input information content of the first interactive information; and
in response to a second trigger operation acted on the media content image, using a first image element in the media content image as an associated image element of the first interactive information, where the first image element corresponds to the second trigger operation.

According to one or more embodiments of the present disclosure, Example 5 is the method according to Example 3, after the displaying at least one display surface, the method further includes:
in response to a switching operation for the display surface, switching a currently displayed display surface by controlling the at least one display surface to rotate, where different display surfaces are used to display detailed information of different pieces of associated interactive information corresponding to a second image element, and the second image element is an associated image element of the second interactive information.

According to one or more embodiments of the present disclosure, Example 6 is the method according to Example 3, where adjacent display surfaces in the at least one display surface are arranged at a preset angle.

According to one or more embodiments of the present disclosure, Example 7 is the method according to Example 1, the displaying at least part of associated interactive information of the media content image includes:
displaying associated interactive information corresponding to an associated image element at an associated display position of the associated image element, where the displayed associated interactive information is kept unchanged; or
switching and displaying different pieces of associated interactive information corresponding to an associated image element at an associated display position of the associated image element.

According to one or more embodiments of the present disclosure, Example 8 is the method according to any one of Examples 1-7, the media content is generated by triggering a second application, and before the receiving a first display operation for the media content, the method further includes:
in response to a posting interface display instruction for the media content, displaying a posting interface of the media content, where the posting interface display instruction is generated by the second application; and
in response to a media content post operation acted on the posting interface, posting the media content.

According to one or more embodiments of the present disclosure, Example 9 provides a method of generating media content, applied to a second application, where the method includes:
in response to a material display operation, displaying a material interface, where at least one candidate material is displayed in the material interface, and the candidate material is obtained by shooting in a single view angle; and
in response to a confirmation operation acted on the material interface, displaying generation prompt information of media content, where the media content is a panoramic video generated based on an original material, the media content supports displaying interactive information at an associated display position of an associated image element corresponding to the interactive information, the original material is a candidate material confirmed by the confirmation operation, and the generation prompt information is used for prompting that the generation of the media content is completed.

According to one or more embodiments of the present disclosure, Example 10 is the method according to Example 9, before the displaying generation prompt information of the media content, the method further includes:
expanding the original material into a panoramic picture and generating a panoramic image sequence frame according to the panoramic picture; and
generating the media content based on the panoramic image sequence frame.

According to one or more embodiments of the present disclosure, Example 11 is the method according to Example 10, a view angle of the panoramic video is switched with a view angle of a target object, and before the generating a panoramic image sequence frame according to the panoramic picture, the method further includes:
extracting the target object presented in a material picture of the original material and generating a dynamic model of the target object; and
the generating a panoramic image sequence frame according to the panoramic picture includes:
generating the panoramic image sequence frame according to the panoramic picture and the dynamic model.

According to one or more embodiments of the present disclosure, Example 12 is the method according to any one of Examples 9-11, after the displaying generation prompt information of the media content, the method further includes:
in response to an instruction generation operation, generating a posting interface display instruction for the media content, where the posting interface display instruction is used to instruct a first application to display a posting interface of the media content, and the posting interface is used to post the media content.

According to one or more embodiments of the present disclosure, Example 13 is the method according to any one of Examples 9-11, where the generation prompt information includes a preview image of the panoramic video.

According to one or more embodiments of the present disclosure, Example 14 provides an apparatus of displaying interactive information, configured in a first application, where the apparatus includes:
an operation receiving module, configured to receive a first display operation for media content; and
a first information display module, configured to, in response to the first display operation, display a media content image of the media content and display at least part of associated interactive information of the media content image, where an associated image element of the associated interactive information is presented in the media content image, the associated interactive information is displayed at an associated display position of the associated image element corresponding to the associated interactive information, and the associated image element is set by a content provider of the associated interactive information.

According to one or more embodiments of the present disclosure, Example 15 provides an apparatus of generating media content, configured in a second application, where the apparatus includes:
a material display module, configured to, in response to a material display operation, display a material interface, where at least one candidate material is displayed in the material interface, and the candidate material is obtained by shooting in a single view angle; and
a prompt module, configured to, in response to a confirmation operation acted on the material interface, display generation prompt information of media content, where the media content is a panoramic video generated based on an original material, the media content supports displaying interactive information at an associated display position of an associated image element corresponding to the interactive information, the original material is a candidate material confirmed by the confirmation operation, and the generation prompt information is used for prompting that the generation of the media content is completed.

According to one or more embodiments of the present disclosure, Example 16 provides an electronic device, including:
one or more processors; and
a memory, configured to store one or more programs,
when the one or more programs are executed by the one or more processors, the one or more processors are caused to implement the method of displaying interactive information according to any one of Examples 1-8 or implement the method of generating media content according to any one of Examples 9-13.

According to one or more embodiments of the present disclosure, Example 17 provides a computer-readable storage medium having a computer program stored thereon, when the program is executed by a processor, the method of displaying interactive information according to any one of Examples 1-8 is implemented or the method of generating media content according to any one of Examples 9-13 is implemented.

According to one or more embodiments of the present disclosure, Example 18 provides a computer program product, when the computer program product is executed by a computer, the computer is caused to implement the method of displaying interactive information according to any one of Examples 1-8 or implement the method of generating media content according to any one of Examples 9-13.

The above description only illustrates preferred embodiments of the present disclosure and applied technical principles. Those skilled in the art should understand that the scope of disclosure involved in the present disclosure is not limited to the technical solution formed by a specific combination of the above technical features, and should also cover other technical solutions formed by any combination of the above technical features or their equivalent features without departing from the above concept of disclosure. For example, the above features and the technical features provided in the present disclosure (but not limited to) with similar functions may be replaced each other to form a technical solution.

Furthermore, although operations are depicted in a particular order, this should not be understood as requiring the operations to be performed in the particular order shown or in a sequential order. Under certain circumstances, multitasking and parallel processing may be beneficial. Similarly, although several specific implementation details are included in the above discussion, these should not be interpreted as limiting the scope of the present disclosure. Certain features that are described in the context of separate embodiments may also be implemented in combination in a single embodiment. Conversely, various features described in the context of a single embodiment may also be implemented in a plurality of embodiments individually or in any suitable sub-combination.

Although the subject matter has been described in terms specific to structural features and/or logical actions of the method, it should be understood that the subject matter defined in the appended claims is not necessarily limited to the specific features or actions described above. Conversely, the specific features and actions described above are merely exemplary forms of implementing the claims.

## Claims

1. A method of displaying interactive information, applied to a first application, wherein the method comprises:
receiving a first display operation for media content; and
in response to the first display operation, displaying a media content image of the media content and displaying at least part of associated interactive information of the media content image, wherein an associated image element of the associated interactive information is presented in the media content image, the associated interactive information is displayed at an associated display position of the associated image element corresponding to the associated interactive information, and the associated image element is set by a content provider of the associated interactive information.

2. The method of claim 1, wherein the media content comprises a panoramic video.

3. The method of claim 1 or 2, wherein after the displaying a media content image of the media content and displaying at least part of associated interactive information of the media content image, the method further comprises at least one of the following:
in response to an interactive information post operation based on the media content image, posting first interactive information for the media content, wherein the first interactive information corresponds to the information post operation; and
in response to a second display operation for second interactive information in the at least part of associated interactive information, displaying at least one display surface and displaying detailed information of the second interactive information in a target display surface in the at least one display surface.

4. The method of claim 3, wherein before the in response to an interactive information post operation based on the media content image, posting first interactive information for the media content, the method further comprises at least one of the following:
in response to a first trigger operation acted on the media content image, displaying an information input area, wherein the information input area is used for a user to input information content of the first interactive information; and
in response to a second trigger operation acted on the media content image, using a first image element in the media content image as an associated image element of the first interactive information, wherein the first image element corresponds to the second trigger operation.

5. The method of claim 3 or 4, wherein after the displaying at least one display surface, the method further comprises:
in response to a switching operation for the display surface, switching a currently displayed display surface by controlling the at least one display surface to rotate, wherein different display surfaces are used to display detailed information of different pieces of associated interactive information corresponding to a second image element, and the second image element is an associated image element of the second interactive information.

6. The method of any of claims 3 to 5, wherein adjacent display surfaces in the at least one display surface are arranged at a preset angle.

7. The method of any of claims 1 to 6, wherein the displaying at least part of associated interactive information of the media content image comprises:
displaying associated interactive information corresponding to the associated image element at an associated display position of the associated image element, wherein the displayed associated interactive information remains unchanged; or
switching and displaying different pieces of associated interactive information corresponding to the associated image element at an associated display position of the associated image element.

8. The method of any of claims 1 to 7, wherein the media content is generated by triggering a second application, and before the receiving a first display operation for the media content, the method further comprises:
in response to a posting interface display instruction for the media content, displaying a posting interface of the media content, wherein the posting interface display instruction is generated by the second application; and
in response to a media content post operation acted on the posting interface, posting the media content.

9. A method of generating media content, applied to a second application, wherein the method comprises:
in response to a material display operation, displaying a material interface, wherein at least one candidate material is displayed in the material interface, and the candidate material is obtained by shooting in a single view angle; and
in response to a confirmation operation acted on the material interface, displaying generation prompt information of media content, wherein the media content is a panoramic video generated based on an original material, the media content supports displaying interactive information at an associated display position of an associated image element corresponding to the interactive information, the original material is a candidate material confirmed by the confirmation operation, and the generation prompt information is used for prompting that the generation of the media content is completed.

10. The method of claim 9, wherein before the displaying generation prompt information of media content, the method further comprises:
expanding the original material into a panoramic picture and generating a panoramic image sequence frame according to the panoramic picture; and
generating the media content based on the panoramic image sequence frame.

11. The method of claim 10, wherein a view angle of the panoramic video is switched with a view angle of a target object, and before the generating a panoramic image sequence frame according to the panoramic picture, the method further comprises:
extracting the target object presented in a material picture of the original material and generating a dynamic model of the target object; and
the generating a panoramic image sequence frame according to the panoramic picture comprises:
generating the panoramic image sequence frame according to the panoramic picture and the dynamic model.

12. The method of any of claims 9 to 11, wherein after the displaying generation prompt information of media content, the method further comprises:
in response to an instruction generation operation, generating a posting interface display instruction for the media content, wherein the posting interface display instruction is used to instruct a first application to display a posting interface of the media content, and the posting interface is used to post the media content.

13. The method of any of claims 9 to 12, wherein the generation prompt information comprises a preview image of the panoramic video.

14. An apparatus of displaying interactive information, configured in a first application, wherein the apparatus comprises:
an operation receiving module, configured to receive a first display operation for media content; and
a first information display module, configured to, in response to the first display operation, display a media content image of the media content and display at least part of associated interactive information of the media content image, wherein an associated image element of the associated interactive information is presented in the media content image, the associated interactive information is displayed at an associated display position of the associated image element corresponding to the associated interactive information, and the associated image element is set by a content provider of the associated interactive information.

15. An apparatus of generating media content, configured in a second application, wherein the apparatus comprises:
a material display module, configured to, in response to a material display operation, display a material interface, wherein at least one candidate material is displayed in the material interface and the candidate material is obtained by shooting in a single view angle; and
a prompt module, configured to, in response to a confirmation operation acted on the material interface, display generation prompt information of media content, wherein the media content is a panoramic video generated based on an original material, the media content supports displaying interactive information at an associated display position of an associated image element corresponding to the interactive information, the original material is a candidate material confirmed by the confirmation operation, and the generation prompt information is used for prompting that the generation of the media content is completed.

16. An electronic device, comprising:
at least one processor; and
a memory communicatively connected to the at least one processor;
wherein the memory stores a computer program executable by the at least one processor, and the computer program is executed by the at least one processor to enable the at least one processor to perform the method of displaying interactive information of any of claims 1 to 8 or perform the method of generating media content of any of claims 9 to 13.

17. A computer-readable storage medium having computer instructions stored thereon, wherein the computer instructions are used to implement the method of displaying interactive information of any of claims 1 to 8 or implement the method of generating media content of any of claims 9 to 13 when executed by a processor.

18. A computer program product comprising a computer program, wherein the computer program implements the method of displaying interactive information of any of claims 1 to 8 or implements the method of generating media content of any of claims 9 to 13 when executed by a processor.
